# EUROPEAN PATENT SPECIFICATION

(11) **EP 1 741 731 B1**
(45) Date of publication and mention of the grant of the patent: **10.09.2008**
(21) Application number: 06012544.0
(22) Date of filing: 19.06.2006
(51) Int. Cl.: C08F 26/10, C08F 226/10, C08F 6/12

(54) **Vinyl pyrrolidone polymer powder with small angle of repose and production method therefor**
Pulverförmiges Vinylpyrrolidonpolymer mit kleinem Böschungswinkel und Herstellungsmethode dafür
Polymère de vinylpyrrolidone poudreux ayant un angle de repos faible et procédé de préparation

(30) Priority: 08.07.2005 JP 2005200970
(43) Date of publication of application: 10.01.2007
(73) Proprietor: Dai-Ichi Kogyo Seiyaku Co., Ltd., Shimogyo-ku Kyoto (JP)
(72) Inventor: Fujise, Keiichi, Kusatsu-shi Shiga 525-0032 (JP)
(74) Representative: Strehl Schübel-Hopf & Partner

(56) References cited:
- EP-A- 0 545 209
- EP-A- 1 437 375

## Description

### BACKGROUND OF THE INVENTION

### Field of the Invention

The present invention relates to a method for producing vinyl pyrrolidone polymer powder.

### Description of the Related Art

Conventionally, when vinyl pyrrolidone polymer powder is produced by drying a vinyl pyrrolidone polymer solution, a spray dryer or a drum dryer has been used (refer to JP-A No. 8-208741). However, the vinyl pyrrolidone polymer powder obtained by using any one of these units under the conditions of the prior art has low bulk density and poor powder flowability.

For the purpose of solving these problems, a method for producing vinyl pyrrolidone polymer powder by using a disc atomizer is proposed (refer to JP-ANo. 2004-211033). However, in this method, although an effect of increasing the bulk density of the powder is attained, an effect of improving the powder flowability is not sufficiently attained.

### SUMMARY OF THE INVENTION

Under these circumstances, the present invention has been achieved and has an object of providing a method for producing the vinyl pyrrolidone polymer powder.

There is provided a method for producing vinyl pyrrolidone polymer powder, containing spray-drying a vinyl pyrrolidone polymer solution in a drying tower, in which vinyl pyrrolidone polymer particles are prevented from adhering to an inside wall of the drying tower by continuously or intermittently blowing the wind toward the inside wall of the drying tower.

According to the invention, in the above-described production method, it is preferable that a direction in which the wind is blown toward the inside wall of the drying tower is at an angle of from 5 to 175° against a circumferential direction of the inside wall of the drying tower.

The vinyl pyrrolidone polymer powder having a small angle of repose has favorable powder flowability and can be handled with ease. Namely, the powder can be subjected to line transportation and, then, charging thereof can be automated. Therefore, cost reduction can be realized at the time of using the vinyl pyrrolidone polymer powder as a raw material.

According to the production method of the invention, desired vinyl pyrrolidone polymer powder having a small angle of repose can easily be obtained.

### BRIEF DESCRIPTION OF THE DRAWINGS

FIG. 1 is a diagram illustrating a direction in which the wind is blown toward an inside wall of a drying tower;
FIG. 2 is a schematic vertical cross-sectional diagram showing an example of configuration of an inside-wall wind-blowing pipe in a drying tower;
FIG. 3 is a schematic plane view illustrating a direction of rotation of an inside-wall wind-blowing pipe in a drying tower; and
FIG. 4 is a schematic vertical cross-sectional diagram illustrating a position of a wind-blowing hole of an inside-wall wind-blowing pipe.

### DETAILED DESCRIPTION OF THE INVENTION

The term "vinyl pyrrolidone polymer" as used herein means a homopolymer of vinyl pyrrolidone (N-vinyl-2-pyrrolidone), or a copolymer of vinyl pyrrolidone and any one of other monomers. In a case of the copolymer, the copolymer is supposed to contain 20% by weight (hereinafter, referred to also as %) or more of a vinyl-pyrrolidone unit.

Examples of such other monomers as each constituting a copolymer include acrylic acid; methacrylic acid; an alkyl ester of acrylic acid (such as methyl acrylate or ethyl acrylate); an alkyl ester of methacrylic acid (such as methyl methacrylate or ethyl methacrylate); an aminoalkyl ester of acrylic acid (such as diethylaminoethyl acrylate); an aminoalkyl ester of methacrylic acid; a monoester of acrylic acid and glycol; a monoester of methacrylic acid and glycol (such as hydroxyethyl methacrylate); an alkali metal salt of acrylic acid; an alkali metal salt of methacrylic acid; an ammonium salt of acrylic acid; an ammonium salt of methacrylic acid; a quaternary ammonium derivative of an aminoalkyl ester of acrylic acid; a quaternary ammonium derivative of an aminoalkyl ester of methacrylic acid; a quaternary ammonium compound of diethylaminoethyl acrylate and methylsulfate; vinyl methyl ether; vinyl ethyl ether; an alkali metal salt of vinyl sulfonic acid; an ammonium salt of vinyl sulfonic acid; styrene sulfonic acid; styrene sulfonate; allyl sulfonic acid; allyl sulfonate; methallyl sulfonic acid; methallyl sulfonate; vinyl acetate; vinyl stearate; N-vinylimidazole; N-vinylacetamide; N-vinylformamide; N-vinylcaprolactam; N-vinylcarbazole; acrylamide; methacrylamide; N-alkylacrylamide; N-methylolacrylamide; N,N-methylenebisacrylamide; glycol diacrylate; glycol dimethacrylate; divinyl benzene; and glycol diallyl ether.

The vinyl pyrrolidone polymer powder which has a small angle of repose and which is obtained by the process according to the invention is such an article as having an angle of repose of less than 30°. The term "angle of repose" as used herein denotes an angle formed between a bus line of a cone which is formed when powder is quietly dropped on a horizontal plane and the horizontal plane, which is the maximum angle of inclination of an inclined face the powder can form. By allowing the angle of repose to be less than 30°, the powder flowability becomes favorable. In order to further improve the powder flowability, it is preferable that the angle of repose is 25° or less.

In the production method according to the invention, at the time of producing the vinyl pyrrolidone polymer powder by spray-drying the vinyl pyrrolidone polymer solution, spherical particles to be obtained are prevented from adhering to the inside wall of the drying tower and, then, being deformed, by continuously or intermittently blowing the wind toward the inside wall of the drying tower and, as a result, a powdery article having a small angle of repose can be obtained.

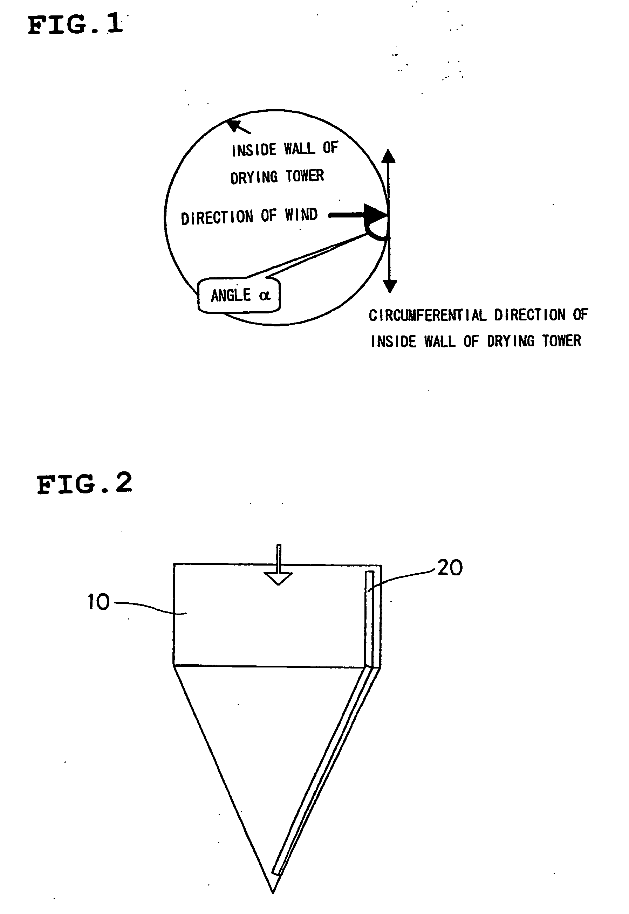

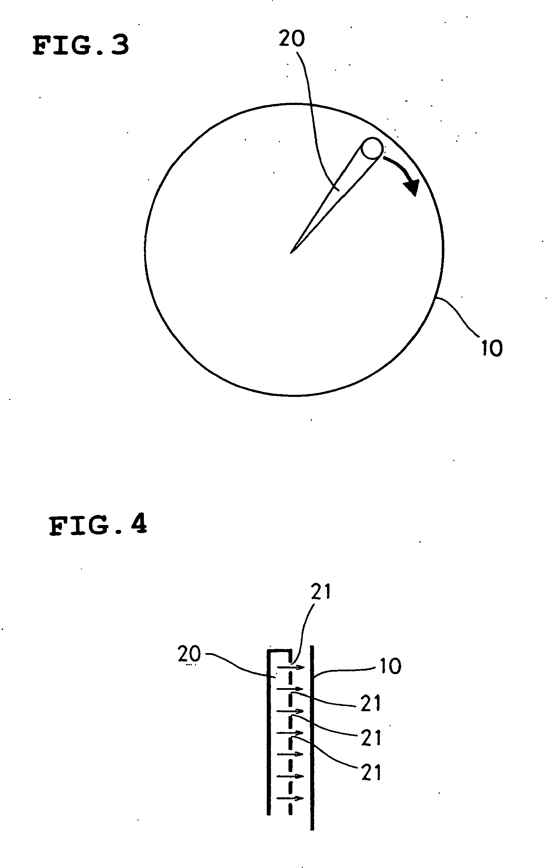

FIGS. 2 and 3 each show a schematic diagram illustrating an example of an apparatus to be used in the production method according to the invention. In FIGS. 2 and 3, reference numeral 10 denotes a drying tower and reference numeral 20 denotes an inside-wall wind-blowing pipe provided along the inside wall of the drying tower 10. As FIG.2 shows, the drying tower according to the invention has an upper portion in a columnar shape and lower portion in a conical shape; however, the shape of the drying tower according to the invention is not limited thereto. In the drying tower 10, a product receiver (not shown) is ordinarily provided in a lower portion thereof. Wind-blowing is introduced from the upper portion and discharged from the lower portion. An aqueous vinyl pyrrolidone polymer solution is sprayed inside the drying tower as shown by an outlined arrow mark, dried while falling and, thereafter, recovered in the product receiver.

The inside-wall wind-blowing pipe 20 is provided such that it can rotate along the inside wall of the drying tower 10 as shown by the arrow mark in FIG. 3. As shown in FIG. 4, in the inside-wall wind-blowing pipe 20, preferably, on a face thereof facing the inside wall of the drying tower 10, a plurality of wind-blowing holes 21 are provided and, then, the wind-blowing is performed through these wind-blowing holes 21 as shown by the arrow mark.

When the direction in which the wind is blown toward the inside wall of the drying tower is closer to a perpendicular direction than to the circumferential direction of the inside wall, the effect of the object of the invention can markedly be realized. Namely, an angle α against the circumferential direction as shown in FIG. 1 is, preferably, from 5 to 175°, more preferably from 10 to 170° and, particularly preferably, about 90°; that is, it is particularly preferable that the wind is blown toward the inside wall approximately perpendicularly.

A volume of the wind to be blown toward the inside wall of the drying tower is, based on the entire volume of the wind to be used for drying, preferably from 0.001 to 40% by vol, more preferably from 0.005 to 30% by vol and, still more preferably, from 0.01 to 10% by vol. When the wind volume is either larger or smaller than those described above, the effect of the invention is reduced.

Further, the entire volume of the wind to be used for drying is not particularly limited and is ordinarily from 2 to 600 Nm³/hr per m³ of the volume of the inside of the drying tower and, preferably, from 10 to 150 Nm³/hr.

Still further, a temperature of the wind to be blown toward the inside wall of the drying tower is in the range of from 0 to 300°C, preferably from 50 to 250°C and, more preferably, from 100 to 200°C. When the temperature thereof is unduly low, drying efficiency is deteriorated, whereas, when the temperature thereof is unduly high, there is a tendency in which the powder having a low angle of repose is hardly obtained.

As for the wind, air or an inert gas is favorably used. As for apparatuses for generating hot wind, an electric heater, and an apparatus which utilizes combustion heat of a combustible gas such as a LP gas or utilizes combustion heat of a flammable oil such as a heavy oil are mentioned. Among these apparatuses, the electric heater and the apparatus which utilizes the combustion heat of the combustible gas are favorable, due to causing less pollution by, for example, soot.

An area of a portion of the inside wall of the drying tower into which the wind is blown is, based on an entire area of the inside wall, preferably 50% or more, more preferably from 80% or more and, still more preferably, 90% or more. As for the portion into which the wind is blown, the upper portion of the drying tower is more effective than the lower portion thereof. This is because the temperature in the upper portion of the drying tower is higher than that in the lower portion thereof. The way of blowing the wind may be continuous or intermittent. When the wind is intermittently blown, it is effective to blow the wind against the inside wall 0.5 times or more per minute.

Spraying methods are not particularly limited and a disc atomizer type and a nozzle type are permissible. As for the nozzle type, any one of a single-flow nozzle type and a double-flow nozzle type can be used.

### EXAMPLES

Hereinafter, the invention is described in detail with reference to embodiments but is not limited thereto.

### [Examples 1 to 5 and Comparative Example 1]

1 t of an aqueous vinyl pyrrolidone polymer solution (trade name: "Pitzcol K-30L"; available from Dai-ichi Kogyo Seiyaku Co., Ltd.; a 30% aqueous solution having a K value of 30) was introduced into a disc atomizer (vane type (VN type); diameter: 15.5 cm; disc peripheral speed: 4900 m/min.) and, then, spray-dried under the conditions of height of drying tower: 10 m; shell diameter of drying tower: 6 m; temperature of hot wind when introduced into drying tower: 200°C; temperature of hot wind when discharged from drying tower: 105°C; supply speed of aqueous vinyl pyrrolidone polymer solution: 400 L/min. and, further, those shown in Table 1. The angle of repose and a ratio (powder flowability) between respective bulk densities before and after tapping of the obtained vinyl pyrrolidone polymer powder were evaluated in accordance with the method described below. The results are simultaneously shown in Table 1. On this occasion, a direction (angle α) in which the wind is blown toward the inside wall of the drying tower is as shown in FIG. 1.

### (Evaluation method)

### Angle of repose:

The angle of repose was measured using 250 ml of vinyl pyrrolidone polymer powder under conditions of 25°C and 50% RH by a MIWA method cylinder rotating-type angle-of-repose measuring instrument (manufactured by Tsutsui Rikagaku Kikai Co., Ltd.) within 10 minutes after the vinyl pyrrolidone polymer powder came into contact with open air. Based on the thus-measured angle of repose, the angle of repose was evaluated in accordance with the following criteria:
O: less than 30°; and
X: 30° or more.

### Ratio between respective bulk densities before and after tapping:

100 ml of vinyl pyrrolidone polymer powder was put in a 100 ml graduated cylinder. Tapping was repeated until volume of the vinyl pyrrolidone polymer powder is no longer changed and, then, the volume was measured at the point at which the volume showed no more changes. A ratio (x: volume after tapping/100) of the volume after tapping against the volume before tapping was computed.

**Table 1**

| | | Example 1 | Example 2 | Example 3 | Example 4 | Example 5 | Comparative Example 1 |
|---|---|---|---|---|---|---|---|
| Angle α | Degree (°) | 10 | 90 | 120 | 150 | 50 | - |
| Volume of wind to be blown toward inside wall of drying tower | Vol% | 0.05 | 1 | 10 | 1 | 0.01 | 0 |
| Temperature of wind to be blown toward inside wall of drying tower | °C | 25 | 50 | 100 | 10 | 80 | - |
| Rotation number of inside-wall wind-blowing pipe | r.p.m. | 1 | 0.5 | 2 | 3 | 5 | - |
| Angle of repose of obtained powder | Degree (°) | 29 | 15 | 21 | 23 | 25 | 30 |
| | Evaluation | O | O | O | O | O | X |
| Ratio between respective bulk densities before and after tapping | Evaluation | 0.88 | 0.98 | 0.95 | 0.92 | 0.90 | 0.75 |

The vinyl pyrrolidone polymer powder obtained by the process according to the invention is favorably used as a raw material for, for example, various types of adhesives, hair treatments, inks, detergents for clothings and therapeutic agents. Since the present polymer has favorable powder flowability, the polymer industrially has an advantage of being easily handled at the time of being charged as a raw material.

## Claims

1. A process for preparing vinyl pyrrolidone polymer powder, comprising spray-drying a vinyl pyrrolidone polymer solution in a drying tower,
wherein vinyl pyrrolidone polymer particles are prevented from adhering to an inside wall of the drying tower by continuously or intermittently blowing the wind toward the inside wall of the drying tower.

2. The process for preparing the vinyl pyrrolidone polymer powder according to Claim 1,
wherein a direction in which the wind is blown toward the inside wall of the drying tower is at an angle of from 5 to 175° against a circumferential direction of the inside wall of the drying tower.

## Patentansprüche

1. Verfahren zur Herstellung eines Vinylpyrrolidonpolymerpulvers, welches das Sprühtrocknen einer Vinylpyrrolidonpolymerlösung in einem Trocknungsturm beinhaltet,
wobei Vinylpyrrolidonpolymerteilchen daran gehindert werden, an einer innenseitigen Wand des Trocknungsturms zu haften, indem kontinuierlich oder in zeitlichen Abständen ein Gasstrom gegen die innenseitige Wand des Trocknungsturms geblasen wird.

2. Verfahren zur Herstellung des Vinylpyrrolidonpolymerpulvers nach Anspruch 1,
wobei eine Richtung, in welche der Gasstrom zur innenseitigen Wand des Trocknungsturms hin geblasen wird, einen Winkel von 5 bis 175 ° gegenüber der Umlaufrichtung der innenseitigen Wand des Trocknungsturms aufweist.

## Revendications

1. Procédé pour préparer une poudre de polymère de vinylpyrrolidone, comprenant le séchage par pulvérisation d'une solution de polymère de vinylpyrrolidone dans une tour de séchage,
dans lequel les particules de polymère de vinylpyrrolidone sont empêchées d'adhérer à une paroi intérieure de la tour de séchage en soufflant de façon continue ou intermittente le vent vers la paroi intérieure de la tour de séchage.

2. Procédé pour préparer la poudre de polymère de vinylpyrrolidone selon la revendication 1, dans lequel la direction dans laquelle le vent est soufflé vers la paroi intérieure de la tour de séchage est à un angle de 5 à 175° par rapport à la direction circonférentielle de la paroi intérieure de la tour de séchage.
